# FASCICULE DE BREVET EUROPEEN

(11) **EP 3 575 156 B1**
(45) Date de publication et mention de la délivrance du brevet: **14.04.2021**
(21) Numéro de dépôt: 19177440.5
(22) Date de dépôt: 29.05.2019
(51) Int. Cl.: B60R 19/02, B62D 25/24, B60R 13/02, B60R 19/18

(54) **COUVERCLE DESTINÉ A FERMER UNE OUVERTURE DANS UNE PAROI**
DECKEL ZUM VERSCHLIESSEN EINER WANDÖFFNUNG
COVER FOR CLOSING AN APERTURE ON A WALL

(30) Priorité: 30.05.2018 FR 1854621
(43) Date de publication de la demande: 04.12.2019
(73) Titulaire: Compagnie Plastic Omnium, 69007 Lyon (FR)
(72) Inventeur: FENZEL, Karl Leopold, 85049 Ingolstadt (DE)
(74) Mandataire: LLR

(56) Documents cités:
- EP-A2- 1 331 138
- WO-A1-2011/004823
- DE-A1- 10 253 881
- DE-A1- 10 340 154
- DE-A1-102006 054 618
- DE-A1-102011 115 684
- DE-U1-202009 012 423
- JP-A- 2004 175 190
- US-A1- 2009 174 204
- US-A1- 2016 200 265

## Description

La présente invention concerne un couvercle destiné à fermer une ouverture qui est réalisée dans une paroi, en particulier d'un élément de carrosserie ou de revêtement d'un véhicule automobile.

On insère des couvercles pour fermer des ouvertures dans des éléments de revêtement de véhicules automobiles partout où sont disposés des éléments fonctionnels en dessous du revêtement, afin qu'ils puissent être facilement accessibles, comme par exemple les anneaux de remorquage disposés derrière les revêtements de pare-chocs. Pour des raisons de coût, ces couvercles sont le plus souvent réalisés en matière plastique, et pour des raisons esthétiques sont généralement peints de la même manière que l'élément de revêtement.

Par ailleurs, de tels couvercles doivent pouvoir être insérés et ouverts facilement, et de manière répétible. C'est pourquoi les constructeurs automobiles prédéfinissent le plus souvent des exigences concernant la force maximale qu'un utilisateur doit ou peut appliquer pour insérer le couvercle et fermer l'ouverture, ou pour repousser le couvercle depuis sa position de fermeture afin de libérer l'ouverture. En même temps, le couvercle doit être maintenu de manière suffisamment sûre et fixe dans la position de fermeture, afin de ne pas avoir de jeu ou de « cliquetis » du couvercle dans l'élément de revêtement, ce qui pourrait générer une impression de gêne ou de qualité « moindre » pour l'utilisateur. Par conséquent, les constructeurs automobiles prédéfinissent souvent un nombre de cycles d'insertion et de retrait du couvercle, comme par exemple une insertion et un retrait du couvercle à cinq ou dix reprises, après lesquels le couvercle doit être maintenu à nouveau fixe et sans générer de « cliquetis ». En d'autres termes, le but est de pouvoir maintenir le couvercle le plus possible de manière constante, même après plusieurs insertions et retraits de celui-ci.

On connaît du document EP 1 331 138 A2 un couvercle destiné à fermer une ouverture, dans lequel la paroi comporte, au niveau de son côté intérieur, au niveau de l'ouverture, un contour d'appui pour le couvercle qui permet de faire pivoter autour d'un axe de basculement le couvercle inséré dans l'ouverture entre une position de fermeture, dans laquelle le couvercle ferme l'ouverture, et une position de basculement, dans laquelle le couvercle bascule par rapport à sa position de fermeture et qui, au niveau du côté extérieur de la paroi, peut être enlevé de l'ouverture et/ou inséré dans l'ouverture. Pour fixer le couvercle, il est prévu au niveau du couvercle un crochet qui dépasse latéralement du couvercle et est, en position de fermeture, en prise par derrière sur un bord de l'ouverture, ainsi que des éléments d'encliquetage de configuration souple et élastique, qui dépassent du côté arrière du couvercle et viennent s'engager dans un contour d'encliquetage fixé dans la paroi. En outre, des contours de guidage sont prévus pour veiller au positionnement relatif prédéfini entre le couvercle et la paroi.

La configuration connue à partir de ce document permet de fermer et dégager facilement l'ouverture, par exemple d'un revêtement de pare-chocs, pour pouvoir avoir accès par exemple à un moyen de remorquage disposé derrière l'ouverture. Par ailleurs, la construction d'un seul tenant du couvercle permet de le réaliser de façon économique par un moulage par injection de matière plastique.

La pratique a montré que les éléments d'encliquetage de configuration souple et élastique peuvent perdre de leur élasticité au fil du temps, à savoir lors d'insertions et de retraits répétés plusieurs fois, de telle sorte qu'un moyen de retenue fixe et qui ne génère pas de cliquetis ne peut pas être garanti dans tous les cas.

Le document DE 10 2006 054 618 A1 a proposé d'utiliser une matière plastique améliorée qui doit mieux résister à la fatigue. Celui-ci présente cependant l'inconvénient de proposer une certaine matière plastique qui n'est éventuellement pas appropriée à chaque zone du véhicule automobile où des revêtements avec des ouvertures correspondantes sont prévus. Par ailleurs, il présente un inconvénient supplémentaire dans le fait de devoir insérer des matériaux de renforcement pour conférer à la matière plastique la résistance et la durée de vie nécessaires, ce qui augmente les coûts du composant.

Le document DE 103 40 154 A1 propose de réaliser un couvercle sous la forme d'un clapet en deux parties, dans lequel une surface intérieure du clapet qui porte un moyen de retenue est réalisée au niveau d'une surface extérieure du clapet, et dans lequel la surface intérieure du clapet et la surface extérieure du clapet sont réalisées sous la forme de couches de matières plastiques différentes, à savoir sous la forme de combinaisons de matières dures et souples. On retrouve encore ici l'inconvénient des coûts de matériaux élevés avec, en plus, l'inconvénient d'avoir des coûts de fabrication élevés pour réaliser les deux couches séparément et les relier l'une à l'autre.

Le document DE 20 2009 012 423 U1 propose une construction dans laquelle une pluralité d'éléments d'encliquetage de type clips sont prévus sur le couvercle et viennent s'engager dans des ouvertures d'encliquetage correspondantes qui sont régulièrement disposées dans un bord d'appui pour le couvercle, les éléments d'encliquetage étant disposés en alternance et à une distance différente du bord du couvercle de protection de telle sorte que leurs forces agissent alternativement à chaque fois sur les bords d'encliquetage supérieurs ou inférieurs des ouvertures d'encliquetage régulièrement disposées dans le bord d'appui. Il est donc nécessaire d'obtenir une distribution de force la plus optimale possible pour améliorer la retenue.

Cette construction est relativement coûteuse du fait de la pluralité d'éléments d'encliquetage et d'ouvertures d'encliquetage. Par ailleurs, il est également nécessaire que la pluralité d'éléments d'encliquetage soient courbés pour être encliquetés dans les ouvertures d'encliquetage de telle sorte que, dans ce cas également, il existe une possibilité de fatigue des matériaux lors des insertions et des retraits répétés.

D'après le document DE 102 53 881 A1**,** on connaît encore un autre dispositif de couvercle, dans lequel est réalisé un tenon sur le côté intérieur du couvercle pour venir s'encliqueter dans une ouverture correspondante. Des courbures sont réalisées au niveau de l'un ou des deux côtés courts opposés du tenon pour pouvoir bloquer par encliquetage le tenon inséré dans l'ouverture. Du fait de sa configuration dans laquelle les courbures formant les surfaces d'encliquetage sont portées et soutenues sur une grande longueur à l'aide d'un corps volumineux, le tenon est lui-même de configuration très rigide. Cela présente pourtant l'inconvénient que les déformations nécessaires pour l'encliquetage ou le blocage par encliquetage ainsi que pour le déblocage et le retrait doivent dans ce cas-là être réalisées au niveau du côté de l'élément de revêtement de telle sorte que la l'élément de revêtement est soumise dans cette zone à des sollicitations élevées et que le risque d'obtenir une fatigue des matériaux lors des insertions et des retraits répétés du couvercle se présente donc sur le côté de l'élément de revêtement

On connaît également les documents US 2009/174204 A1, WO 2011/004823 A1 et US 2016/200265 A1 qui décrivent chacun un couvercle selon le préambule de la revendication 1.

Le but de l'invention est donc de pallier les inconvénients ci-avant en proposant un couvercle destiné à fermer une ouverture qui est réalisée dans une paroi, en particulier d'un élément carrosserie ou de revêtement d'un véhicule automobile.

L'invention a également pour objet de fournir un couvercle destiné à fermer une ouverture qui est réalisée dans une paroi, en particulier d'un élément de carrosserie ou de revêtement d'un véhicule automobile, et qui peut assurer une tenue suffisamment résistante même en cas d'insertions et de retraits multiples, qui peut être réalisé facilement et économiquement et qui permet d'obtenir une bonne qualité visuelle de l'apparence extérieure du couvercle inséré dans la paroi.

### Résumé

Le présent but de l'invention et d'autres objets sont atteints, selon un second aspect, par un couvercle conforme à l'énoncé de la revendication 1.

Le présent but de l'invention et d'autres objets sont atteints par un couvercle destiné à fermer une ouverture qui est réalisée dans une paroi, en particulier d'un élément de carrosserie ou de revêtement d'un véhicule automobile, dans lequel le couvercle présente au moins un élément d'encliquetage qui dépasse depuis un côté arrière du couvercle et est prévu pour, dans la position de fermeture, venir en prise avec un contour d'encliquetage fixé dans la paroi et associé à l'élément d'encliquetage, dans lequel l'élément d'encliquetage présente un pied et un ergot d'encliquetage, et dans lequel l'ergot d'encliquetage définit une surface d'encliquetage qui, dans la position de fermeture, s'appuie contre le contour d'encliquetage. Sont également prévus une barre longitudinale qui dépasse du côté arrière du couvercle et s'étend, à partir d'un côté du pied, dans une direction sensiblement parallèle à une direction longitudinale du pied, et au moins une barre transversale qui dépasse du côté arrière du couvercle et s'étend à partir de la barre longitudinale dans une direction transversale à la barre longitudinale, dans lequel le pied, la barre longitudinale et ladite au moins une barre transversale sont réalisées d'un seul tenant.

Selon l'invention, on propose donc de concevoir un élément d'encliquetage d'un couvercle de telle sorte que le pied de l'élément d'encliquetage se prolonge dans la direction longitudinale du pied jusque dans un côté dans une barre de telle sorte que l'élément d'encliquetage soit, pour une largeur constante sur une plus grande longueur, et donc une plus grande surface de base, réalisé au niveau du côté arrière du couvercle. Au niveau de la barre qui s'étend dans la direction longitudinale du pied, désignée ici comme barre longitudinale afin de bien la distinguer, se raccorde une barre qui s'étend transversalement à celle-ci et que l'on désignera ici comme barre transversale afin de bien la distinguer. Tandis que la barre longitudinale est fixée à l'endroit de la liaison de la barre transversale et est donc immobile, la barre longitudinale est fixée à l'endroit de la liaison avec le pied seulement au niveau du côté arrière du couvercle, de telle sorte que la barre longitudinale peut se déplacer au niveau de cet emplacement avec le pied et se courber en particulier lors des insertions et des retraits. La barre longitudinale forme de cette manière une sorte de ressort de torsion, qui peut précontraindre le pied et l'ergot d'encliquetage en direction du contour d'encliquetage, de telle sorte que des forces de retenue suffisamment élevées peuvent être obtenue avec une construction simple. La barre longitudinale peut de préférence former l'élément de ressort de torsion du premier aspect.

Un avantage particulier de l'invention réside dans le fait que, dans ce cas, le pied peut être réalisée étroite, c'est-à-dire avec une largeur faible, en particulier avec une largeur inférieure d'environ 0,4 fois l'épaisseur du matériau du couvercle à l'emplacement de l'élément d'encliquetage. On peut de cette manière éviter qu'il se présente localement une accumulation de matière lors du moulage par injection, ce qui, en raison d'un comportement de refroidissement et de rétrécissement modifiée localement, pourrait conduire à des inégalités locales perceptibles visuellement dans la surface sur le côté visible et influencer négativement l'apparence du couvercle.

De même, pour obtenir une force de retenue suffisamment élevée, il n'est pas nécessaire de renforcer localement le pied elle-même, par exemple en concevant localement des épaississements ou des barres d'appui dans la direction transversale au support par rapport au couvercle, lesdits épaississements ou barres pouvant conduire à un comportement de courbure variable localement et donc à une sollicitation locale irrégulière des matériaux et le cas échéant à une déformation plastique locale. En outre, la simple construction de l'élément d'encliquetage, avec l'élément de pied qui se prolonge dans la direction longitudinale directement dans la barre longitudinale, offre la possibilité, lors de la courbure de l'élément d'encliquetage, de répartir et dériver de manière homogène les forces survenant pendant l'insertion et le retrait du couvercle. Le risque de déformations plastiques locales, et le risque d'une élasticité amoindrie associé, est ainsi sensiblement évité.

L'efficacité de ces mesures peut être vérifiée en insérant un couvercle de façon répétée, par exemple cinq fois ou dix fois, dans l'ouverture prévue à cet effet et en l'enlevant de cette ouverture, la force de pression nécessaire pour enlever le couvercle étant mesurée. Cela permet de vérifier que la force de pression maximale prédéfinie par un constructeur automobile pour l'ouverture et le retrait du couvercle n'est pas dépassée, et que, même après cinq ou dix ouvertures et retraits du couvercle par exemple, la force de pression nécessaire à cet effet se situe au-dessus d'une valeur de comparaison correspondant à une tenue fixe et sans engendrer de cliquetis du couvercle dans l'ouverture, la valeur de comparaison pouvant être déterminée par exemple par des simulations numériques et/ou des séries d'expériences pratiques.

Comme la force de ressort et l'élasticité de l'élément d'encliquetage sont définies selon l'invention sensiblement par la barre longitudinale et sa fixation à travers la ou les barres transversales, dans le processus de développement on obtient en outre l'avantage que la géométrie de l'ergot d'encliquetage et du pied peut être réalisée avec une plus grande liberté de configuration, de telle sorte qu'une meilleure optimisation de la géométrie de ces éléments peut être obtenue sur la géométrie de l'élément d'encliquetage et la prise peut être réalisée au niveau de celle-ci, tandis que les exigences en matière d'élasticité et de force de ressort peuvent être remplies par une configuration et un « réglage » de la barre longitudinale et de la barre transversale, en particulier de la distance de la barre transversale par rapport au pied et/ou du nombre et du placement des barres transversales. En particulier, de cette manière on peut obtenir un processus de configuration itératif simple, dans lequel on peut partir par exemple d'une construction avec seulement une barre transversale disposée à une distance relativement importante du pied, conformément à une force de ressort correspondante « souple », pour ajouter, dans des étapes de configuration successives en fonction des besoins et des demandes, une ou plusieurs barre transversales supplémentaires, en particulier situées plus près du pied et/ou agrandir des barres transversales existantes, en particulier au niveau de la hauteur de leur liaison avec la barre longitudinale, pour ainsi pouvoir fixer plus rigidement la barre longitudinale et ainsi avancer successivement vers une force de ressort correspondante « plus dure », sans devoir réaliser pour cela une modification de géométrie de l'ergot d'encliquetage ou du pied et donc de la géométrie de la prise de l'élément d'encliquetage.

Préférablement, ladite au moins une barre transversale s'étend selon un angle compris entre 60° et 120°, préférablement entre 80° et 100°, particulièrement préférablement entre 85° et 95° par rapport à la barre longitudinale.

Selon l'invention, la une barre transversale comprend une barre transversale qui est réalisée au niveau d'une extrémité de la barre longitudinale opposée au pied et/ou peut comprendre une barre transversale qui est réalisée au niveau d'un côté de la barre longitudinale et est réalisée dans une zone entre l'extrémité en regard du pied et l'extrémité de la barre longitudinale opposée au pied.

Le ou les barres transversales peuvent être disposées en différentes quantités et/ou en différents emplacements au niveau de la barre longitudinale pour obtenir une force de ressort souhaitée. De cette manière, il est possible de faire correspondre et de régler l'élasticité et la force de ressort au regard des exigences définies pour une certaine application.

Avantageusement, au niveau de l'extrémité de la barre transversale opposée à la barre longitudinale, un élément de guidage latéral est réalisé et prévu pour venir en appui contre un élément de guidage latéral pratiqué au niveau de la paroi.

De préférence, la barre longitudinale présente, au niveau de l'extrémité en regard du pied, une hauteur qui est supérieure ou égale à la hauteur du pied. Il est également possible de prévoir que la barre longitudinale présente, au niveau de l'extrémité en regard du pied au niveau du côté supérieur, un élément de rayon réalisée, par le biais de laquelle la barre longitudinale est reliée à l'ergot d'encliquetage. Il est également possible en outre que l'ergot d'encliquetage présente, sur le côté en regard de la barre longitudinale, un élément de renforcement, et, dans l'ergot d'encliquetage, un évidement est en outre réalisé et s'ouvre vers le côté arrière qui est opposé à la surface d'encliquetage et latéralement vers le côté opposé de la barre longitudinale. On peut ainsi prévoir de préférence qu'un rapport de l'épaisseur de matériau de l'élément de renforcement, en tant qu'épaisseur dans le sens de la direction longitudinale de la barre longitudinale, sur l'épaisseur de la barre longitudinale est compris entre 0,8 à 2,0, de préférence entre 1,0 et 1,5, encore préférentiellement entre 1,1 et 1,3.

Ces mesures (individuelles ou combinées) permettent une dérivation améliorée et plus homogène des forces appliquées dans l'ergot d'encliquetage lors de l'insertion et le retrait du couvercle dans l'ouverture.

Préférablement, on peut prévoir que le pied et la barre longitudinale présentent une épaisseur sensiblement égale, dans lequel préférablement un rapport de l'épaisseur sur une épaisseur de matériau du couvercle est compris entre 0,25 et 0,40, et particulièrement préférablement compris entre 0,30 et 0,37.

Ces dimensions permettent d'une part d'obtenir une liaison la meilleure possible du pied avec la barre longitudinale au niveau du côté arrière du couvercle, tandis qu'en même temps on peut éviter d'obtenir une accumulation de matières localement lors du moulage par injection, ce qui pourrait conduire à des inégalités locales perceptibles visuellement dans la surface sur le côté visible et influencer négativement l'apparence du couvercle.

On peut prévoir préférablement que la barre longitudinale s'étende sur une longueur qui est comprise entre 4 et 10 mm, de préférence entre 5 et 8 mm, encore préférentiellement entre 6 et 7 mm, et/ou qu'un rapport de la longueur de la barre longitudinale sur la longueur du pied est compris entre 0,7 à 1,3, de préférence entre 0,8 et 1,2, encore préférentiellement entre 0,9 et 1,1, et en particulier est sensiblement égal à 1, et/ou qu'un rapport de la hauteur de la barre longitudinale sur la hauteur du pied se situe entre 0,8 et 1,2, de préférence entre 0,9 et 1,1, et encore préférentiellement est sensiblement égal à 1,0.

De préférence, le couvercle présente deux éléments d'encliquetage qui peuvent être disposés de préférence parallèlement l'un à l'autre avec des ergots d'encliquetage tournés dans des directions opposées, et dans lequel les barres transversales des deux éléments d'encliquetage peuvent s'étendre dans des directions respectivement opposées depuis les deux barres longitudinales des deux éléments d'encliquetage.

Il est également possible de prévoir que le couvercle, une fois inséré dans l'ouverture, peut pivoter autour d'un axe de basculement entre une position de fermeture, dans laquelle le couvercle ferme l'ouverture, et une position de basculement dans laquelle le couvercle bascule par rapport à sa position de fermeture et peut être enlevé de l'ouverture et/ou inséré dans l'ouverture, dans lequel le couvercle est formé de manière sensiblement complémentaire à l'ouverture et remplit sensiblement celle-ci dans la position de fermeture, dans lequel la paroi présente au niveau de l'ouverture un élément d'appui pour le couvercle, dans lequel le couvercle présente au moins un ardillon qui est prévu sur le côté arrière du couvercle pour, dans la position de fermeture, être en prise par derrière sur un bord de l'ouverture, dans lequel, dans la position de fermeture, l'action d'une force de pression au niveau d'un côté avant du couvercle dans une zone opposée à au moins un élément d'encliquetage par rapport à l'axe de basculement conduit à dégager ledit au moins un élément d'encliquetage et à faire basculer le couvercle de sa position de fermeture dans sa position de basculement.

Le côté avant du couvercle est de préférence formé de telle sorte qu'il forme, dans la position de fermeture, un bloc d'un seul tenant avec la paroi.

La paroi peut être formée par un revêtement de pare-chocs d'un véhicule automobile, l'ouverture permettant préférablement un accès à un moyen de remorquage, par exemple un anneau de remorquage ou un crochet de dépannage, du véhicule automobile à travers le revêtement de pare-chocs.

L'invention propose en outre un agencement de paroi-couvercle, en particulier d'un élément de carrosserie ou de revêtement d'un véhicule automobile, qui comprend, comme décrit ici, un couvercle et une paroi, dans laquelle l'ouverture est réalisée et peut être fermée par le couvercle.

### Brève description des dessins

Des exemples de réalisation préférés de l'invention sont représentés dans les dessins et sont expliqués de manière plus détaillée dans la description qui va suivre, dans lesquels les mêmes numéros de référence se rapportent à des composants identiques ou fonctionnellement identiques ou similaires, dans lesquels :
la figure 1 représente une vue schématique en perspective d'un couvercle selon un mode de réalisation, vue depuis le côté arrière du couvercle qui ne correspond pas à l'invention;
la figure 2 représente une vue schématique en perspective d'une ouverture de paroi, dans laquelle le couvercle de la figure 1 doit être inséré, vue depuis le côté arrière ;
la figure 3 représente une vue schématique en perspective d'un couvercle de la figure 1 qui ne correspond pas à l'invention, inséré dans l'ouverture de paroi de la figure 2, vue depuis le côté arrière ;
la figure 4 représente une vue agrandie de deux éléments d'encliquetage qui ne correspondent pas à l'invention et qui s'engagent sur des contours d'encliquetage ;
la figure 5 représente une autre vue des deux éléments d'encliquetage de la figure 4 ;
la figure 6 représente schématiquement des éléments d'encliquetage correspondant à l'invention;
la figure 7 représente une vue en perspective d'un couvercle selon un autre mode de réalisation, qui ne correspond pas à l'invention, vue depuis le côté arrière du couvercle
la figure 8 représente une vue en perspective d'une ouverture de paroi, dans laquelle le couvercle de la figure 7 doit être inséré, vue depuis le côté arrière ; et
la figure 9 représente une vue en perspective d'un couvercle de la figure 7 , qui ne correspond pas à l'invention, inséré dans l'ouverture de paroi de la figure 8, vue depuis le côté arrière.

### Description détaillée

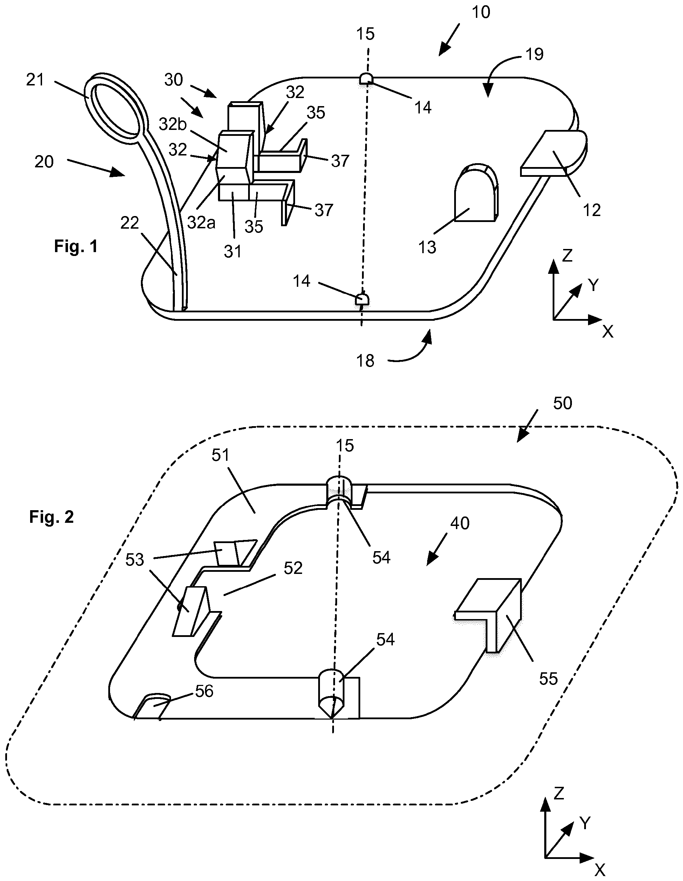

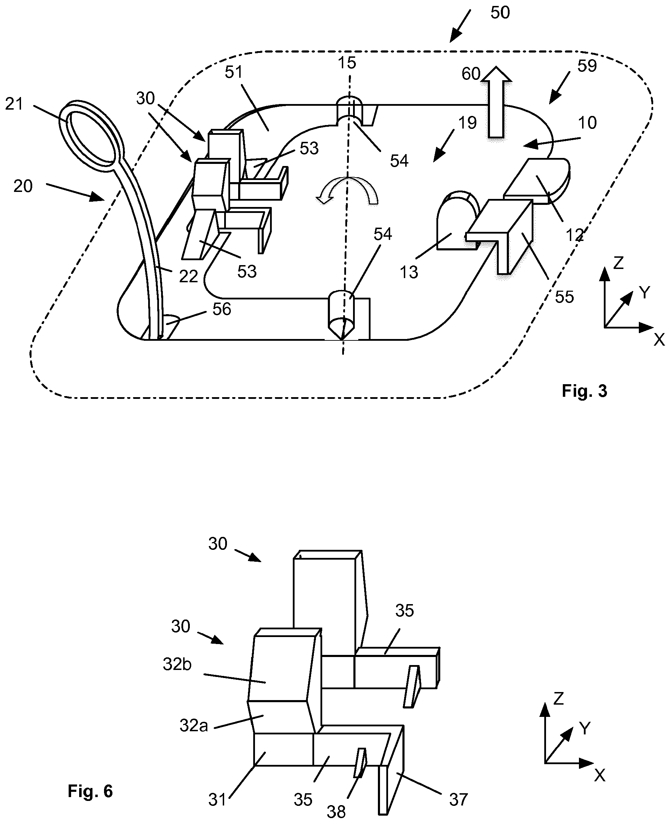

La figure 1 représente une vue schématique en perspective d'un couvercle 10, vu depuis le côté arrière du couvercle 10, selon un mode de réalisation qui ne correspond pas à l'invention. Sur la figure 2, est représentée une vue schématique en perspective d'une paroi 50, vue depuis le côté arrière de la paroi 50, dans laquelle une ouverture 40 est pratiquée, à l'intérieur de laquelle le couvercle 10 de la figure 1 doit être inséré. La figure 3 représente un agencement, dans lequel le couvercle 10 de la figure 1 est inséré dans la paroi 50 de la figure 2.

La paroi 50 peut par exemple être formée par un élément de carrosserie ou de revêtement d'un véhicule automobile. De préférence, la paroi 50 est formée par un revêtement de pare-chocs d'un véhicule automobile, en particulier d'une voiture particulière, où l'ouverture 40 sert de préférence à permettre un accès à travers le revêtement de pare-chocs (paroi 50) jusqu'à un moyen de remorquage non représenté ici, tel qu'un anneau de remorquage ou un crochet de dépannage.

La paroi 50 présente, au niveau de l'ouverture 40, un élément d'appui 51 pour le couvercle 10. Cet élément d'appui 51 est réalisé ou formé de manière appropriée de telle sorte qu'il entoure au moins partiellement le bord de l'ouverture 40, et que le couvercle 10 inséré dans l'ouverture 40 puisse pivoter autour d'un axe de basculement 15 entre une position de fermeture reproduite sur la figure 3, et une position de basculement. L'axe de basculement 15 s'étend parallèlement au couvercle 10.

Dans la position de fermeture, le couvercle 10 ferme l'ouverture 40. À l'inverse, dans la position de basculement le couvercle 10 peut être retiré de l'ouverture 40 ou inséré dans l'ouverture 40. À cet effet, le couvercle 10 est formé sensiblement de manière complémentaire à l'ouverture 40 de telle sorte que ce couvercle 10 remplit sensiblement l'ouverture 40 dans la position de fermeture du couvercle 10. Un côté avant 18 du couvercle 10 est formé de manière appropriée de telle sorte que dans la position de fermeture, il forme un bloc d'un seul tenant avec la paroi 50. En d'autres termes, le couvercle 10 est, au niveau de son côté avant 18, adapté au contour extérieur de la paroi 50. Dans le mode de réalisation préféré, dans lequel la paroi 50 est formée par un revêtement de pare-chocs, le revêtement de pare-chocs (paroi 50) peut être muni d'une peinture au niveau de son côté extérieur 58. De préférence, le couvercle 10 possède alors également, au niveau de son côté avant 18, une telle peinture pour intégrer le couvercle 10 dans sa position de fermeture également de manière optique et haptique dans la paroi 50.

Le couvercle 10 présente, au niveau de son côté arrière 19, un ardillon 12 qui dépasse latéralement d'un bord du couvercle 10. Dans la position de fermeture selon la figure 3, l'ardillon 12 est en prise par derrière sur le bord de l'ouverture 40 et repose au niveau du côté arrière de la paroi 50.

Au niveau de son côté arrière 19, le couvercle 10 présente en outre deux éléments d'encliquetage 30. Dans la position de fermeture, les éléments d'encliquetage 30 sont encliquetés au niveau des éléments d'encliquetage 53 correspondants, qui sont réalisés de sorte à être solidaires de la paroi. Les éléments d'encliquetage 30 sont ainsi réalisés de manière souple, ce qui permet de réaliser un enclenchement détachable de manière non destructible. Comme illustré, on peut, dans ce cas, prévoir de préférence que les contours d'encliquetage 53 soient réalisés sur un côté vers l'arrière de l'élément d'appui 51, de manière adjacente à un évidement 52 prévu dans l'élément d'appui 51 et réalisé pour recevoir les éléments d'encliquetage 30.

Le couvercle 10 présente en outre, au niveau de son côté arrière 19, deux saillies 14 disposées et réalisées de manière à être reçues dans deux zones de réception 54 correspondantes qui sont réalisées dans l'élément d'appui 51 et de manière à définir l'axe de basculement 15 autour duquel le couvercle 10 peut basculer entre la position de fermeture et la position de basculement.

Dans la position de fermeture représentée sur la figure 3, le couvercle 10 est disposé dans l'ouverture 40 et est fixé au niveau de la paroi 50 de manière à être retenu automatiquement. Pour faire passer le couvercle 10 de sa position de fermeture dans sa position de basculement, une force de pression est appliquée dans le couvercle 10 conformément à une flèche 40 au niveau du côté avant 18 du couvercle 10 dans une zone opposée aux éléments d'encliquetage 30 par rapport à l'axe de basculement 15, par exemple l'utilisateur pousse avec un doigt contre le couvercle 10 depuis le côté avant 18 conformément à la flèche 60. Cette force de pression 60 est convertie en une force de traction au niveau des éléments d'encliquetage 30 par le biais des saillies 14 qui définissent l'axe de basculement 15 et sont maintenues et intégrées dans les zones de réception 54 de l'élément d'appui 51. Si l'action de la force de pression est suffisamment grande, les éléments d'encliquetage 30 se décliquettent de leur élément d'encliquetage 53 et se trouvent libérés. Le couvercle 10 peut alors pivoter dans sa position de basculement autour de l'axe de basculement 15. Dans la position de basculement, le couvercle 10 peut désormais être retiré de l'ouverture 40.

Pour veiller à une position prédéfinie du couvercle 10 dans l'ouverture 40, il est possible de concevoir en outre, sur le côté arrière 19 du couvercle 10, un ou plusieurs éléments de guidage latéral 13. L'élément de guidage latéral 13 permet un guidage du couvercle 10 le long de la direction d'extension de la barre transversale 37. De préférence, on prévoit un élément de guidage latéral 13 par barre transversale 37. À titre d'exemple, on a représenté un élément de guidage latéral 13, qui vient, dans la position de fermeture du couvercle 10, en appui contre un élément de guidage latéral 55 réalisé au niveau de la paroi 50. On comprendra que des éléments de guidage latéral correspondantes 13 peuvent également être réalisés en d'autres emplacements du couvercle 10 et/ou de la paroi 50.

Le couvercle 10 présente en outre un élément de prise 20 qui présente une bande de prise 22 et une tête 21 réalisée à l'extrémité libre de la bande de prise 22. À l'élément de prise 20 est associé un évidement 56 qui est réalisé dans un élément d'appui 51. Pour introduire l'élément de prise 20 dans l'évidement 56 correspondant, la tête 21 est comprimée et guidée à travers l'évidement 56. De cette manière, l'élément de prise 20 peut maintenir efficacement le couvercle 10 également dans l'état enlevé au niveau de la paroi 50 de telle sorte que le couvercle 10 ne puisse pas être perdu. Sur les figures, l'élément de prise 20 est représenté avec une tête 21 approximativement ovoïde ou annulaire. Ceci n'est cependant en aucun cas limitatif, et la tête 21 peut également être réalisée par exemple sous la forme d'une ancre ou dans une autre forme qui permette une mise en place à travers l'évidement 56.

Le couvercle 10, conjointement avec les éléments d'encliquetage 30, le ou les éléments de guidage latéral 12 et l'élément de prise 20, est de préférence réalisé sous la forme d'un composant monobloc ou d'un seul tenant, en particulier sous la forme d'un composant moulé par injection. Pour la finition du couvercle 10, ce couvercle 10 peut éventuellement être muni de la peinture au niveau de son côté avant 18.

Comme représenté sur les figures 1 à 3, les éléments d'encliquetage 30 présentent chacun un ergot d'encliquetage 32 qui est portée par un pied 31. L'ergot d'encliquetage 32 définit une surface d'encliquetage 32a qui, dans la position de fermeture, entre en appui contre une surface d'appui correspondante du contour d'encliquetage 53, de telle sorte que l'élément d'encliquetage 30 vient en prise avec le contour d'encliquetage 53. L'ergot d'encliquetage 32 définit également une surface d'introduction 32b réalisée pour permettre l'introduction du couvercle 10. L'encliquetage des ergots d'encliquetage 32 avec les éléments d'encliquetage 53 se fait de manière répétible.

A cet effet, les ergots d'encliquetage 32 forment une pince faisant saillie à partir du pied 21. Plus précisément, les ergots d'encliquetage 32 forment des branches opposées l'une à l'autre et qui sont formées respectivement incurvées vers l'extérieur en s'écartant l'une de l'autre.

Les ergots d'encliquetage 32 coopèrent avec les éléments d'encliquetage 53 qui forment des ergots faisant saillie à partir de l'élément d'appui 51. Dans la position fermée, les ergots d'encliquetage 32 exercent une pression contre les éléments d'encliquetage 53. Les ergots d'encliquetage 32 permettent ainsi de maintenir en position fermée le couvercle 10 dans une direction verticale.

Comme également représenté, chaque élément d'encliquetage 30 présente en outre une barre (ci-après désignée par barre longitudinale) 35 qui est disposée vers un côté du pied 31 et s'étend dans la direction longitudinale du pied (dans les figures, la direction de l'axe X). À l'autre extrémité de la barre longitudinale 35, une barre (ci-après désignée par barre transversale) 37 est réalisée à chaque fois et s'étend dans une direction transversale à la direction longitudinale de la barre longitudinale 35 (dans les figures, la direction de l'axe Y). La barre longitudinale 35 forme de cette manière une sorte de ressort de torsion qui, lors de l'insertion et le retrait du couvercle 10, peut se déplacer élastiquement et de façon rotative sur le côté du pied 31 avec celui-ci, tandis que l'autre extrémité de la barre longitudinale 35 est fixée et immobilisée par la barre transversale 37.

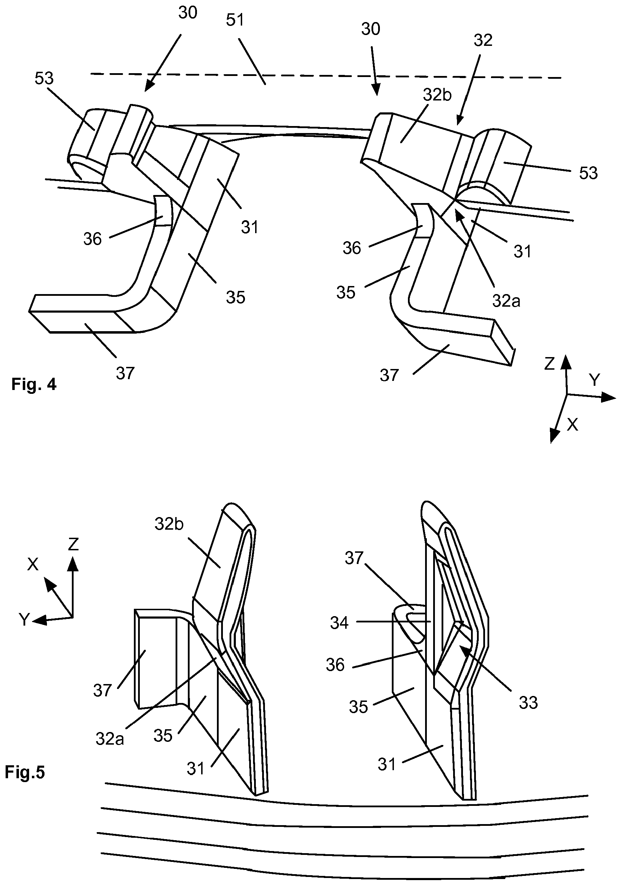

Une configuration possible des éléments d'encliquetage 30 est représentée dans les figures 4 et 5, la figure 4 illustrant un état dans lequel le couvercle 10 est inséré dans l'ouverture 40 de la paroi 50, et la figure 5 illustrant le couvercle 10 dans l'état non inséré.

Comme représenté, la barre longitudinale 35 présente de préférence une épaisseur (sur les figures : extension dans la direction de l'axe Y) sensiblement égale à l'épaisseur du pied 31. L'épaisseur de la barre longitudinale 35 et du pied est de préférence définie par rapport à l'épaisseur de matériau du couvercle 10, c'est-à-dire que l'épaisseur du couvercle 10 dans la direction de l'axe Z sur les figures se situe dans un rapport compris entre 0,25 et 0,40, et particulièrement préférablement entre 0,30 et 0,37.

La hauteur de la barre longitudinale 31, c'est-à-dire dans les figures l'extension dans la direction Z, est de préférence choisie pour correspondre à la hauteur du pied 31. La hauteur du pied 31 est ici considérée comme la distance entre la surface de base (côté arrière 19) du couvercle 10 et le bord limite inférieur de la surface d'encliquetage 32a. Ainsi, un rapport de la hauteur de la barre longitudinale 35 sur la hauteur du pied 31 peut être compris par exemple entre 0,8 et 1,2, préférablement entre 0,9 et 1,1, et particulièrement préférablement est sensiblement égal à 1,0.

Il est plus particulièrement préférable de concevoir, comme illustré sur les figures 4 et 5, au niveau de la liaison de la barre longitudinale 35 avec le pied 31 au niveau de l'extrémité supérieure de la barre longitudinale 35, un élément de rayon 36 par le biais de laquelle la barre longitudinale 35 est directement reliée à l'ergot d'encliquetage 32. L'élément de rayon peut dans ce cas présenter par exemple un rayon entre 0,7 et 3 mm, préférablement entre 1,2 et 2,5 mm. De cette manière, des forces existantes au niveau de l'ergot d'encliquetage 32 peuvent être mieux dérivées dans la barre longitudinale 35 et de manière plus homogène, pour ainsi permettre d'éviter des sollicitations excessives appliquées localement, qui pourraient conduire à une déformation plastique.

L'ergot d'encliquetage 32 peut être réalisée sous la forme d'un corps plein avec une partie sensiblement triangulaire (dans les figures, une coupe transversale dans le plan Y-Z-), préférablement avec des coins arrondis. Mais préférablement, comme illustré sur les figures 4 et 5, l'ergot d'encliquetage 32 peut être réalisé avec un évidement 33 qui s'étend depuis le côté arrière de l'ergot d'encliquetage 32 jusque dans celle-ci et s'ouvre vers un côté de l'ergot d'encliquetage 32 qui est opposé à la barre longitudinale 35. Sur le côté de la barre longitudinale 35, l'ergot d'encliquetage 32 est en revanche réalisé avec un élément de renforcement 34 de telle sorte que, dans cette zone, l'ergot d'encliquetage 32 présente une coupe transversale sensiblement triangulaire dans le plan Y-Z avec des coins arrondis, l'élément de rayon 36 étant reliée à l'élément de renforcement 34. L'élément de renforcement 34 confère à l'ergot d'encliquetage 32 une rigidité suffisamment grande afin que l'ergot d'encliquetage 32 puisse pousser fortement contre le contour d'encliquetage 53 et ainsi veiller à un maintien sûr, les forces appliquées sur l'élément renforcement 34 et l'élément de rayon 36 reliée à celle-ci pouvant être dérivées dans la barre longitudinale 35. En même temps, l'évidement 33 confère à l'ergot d'encliquetage 32 une certaine quantité de flexibilité de manière à pouvoir mieux façonner l'ergot d'encliquetage 32 au niveau de la forme correspondante de l'élément d'encliquetage 53, en particulier en tenant compte des tolérances des composants.

La longueur de la barre longitudinale 35, c'est-à-dire l'extension dans la direction X dans les figures, peut également être choisie de préférence par rapport à la longueur du pied 31. Des essais pratiques montrent ainsi qu'un rapport de la longueur de la barre longitudinale 35 sur la longueur du pied 31 compris entre 0,7 et 1,3, de préférence compris entre 0,8 et 1,2, encore préférentiellement entre 0,9 et 1,1, et en particulier sensiblement égal à 1, présente de bons résultats. Mais ceci n'est pas limitatif, et il est en particulier également possible de prévoir des longueurs plus grandes pour la barre longitudinale 35. Ainsi, avec des barres longitudinales 35 plus longues, on peut aussi obtenir une concordance très rigide ou un effet de ressort très grand, par exemple lorsqu'une ou plusieurs barres transversales supplémentaires sont prévues le long de la longueur de la barre longitudinale 35 pour renforcer celle-ci dans une zone médiane, comme représenté sur la figure 6.

Ainsi, comme la figure 6 l'illustre, il est possible de prévoir aussi bien une barre transversale 37 au niveau de l'extrémité d'une barre longitudinales 35 que, selon l'invention, une autre barre transversale 38 supplémentaire qui est réalisée au niveau d'un côté de la barre longitudinale 35. Une telle configuration selon l'invention peut en particulier être appropriée à l'endroit où la barre longitudinale 35 doit être renforcée de manière supplémentaire de telle sorte que la barre longitudinale 35 présente une force de ressort plus grande contre un décalage de l'élément d'encliquetage 30. La barre transversale 38 peut ainsi, selon les exigences, être disposée à des endroits différents le long de la longueur de la barre longitudinale 35 et/ou être réalisée avec des géométries différentes, en particulier avec des hauteurs différentes, avec lesquelles la barre transversale 38 est reliée à la barre longitudinale 35. Comme illustré sur la figure 6, il est également possible de prévoir uniquement une barre transversale 38 réalisée au niveau d'un côté de la barre longitudinale 35, sans prévoir de barre transversale 37 réalisée au niveau d'une extrémité de la barre longitudinale 35. En outre, il est également possible de concevoir plusieurs barres transversales latérales 38 à différents endroits de la barre longitudinale 35.

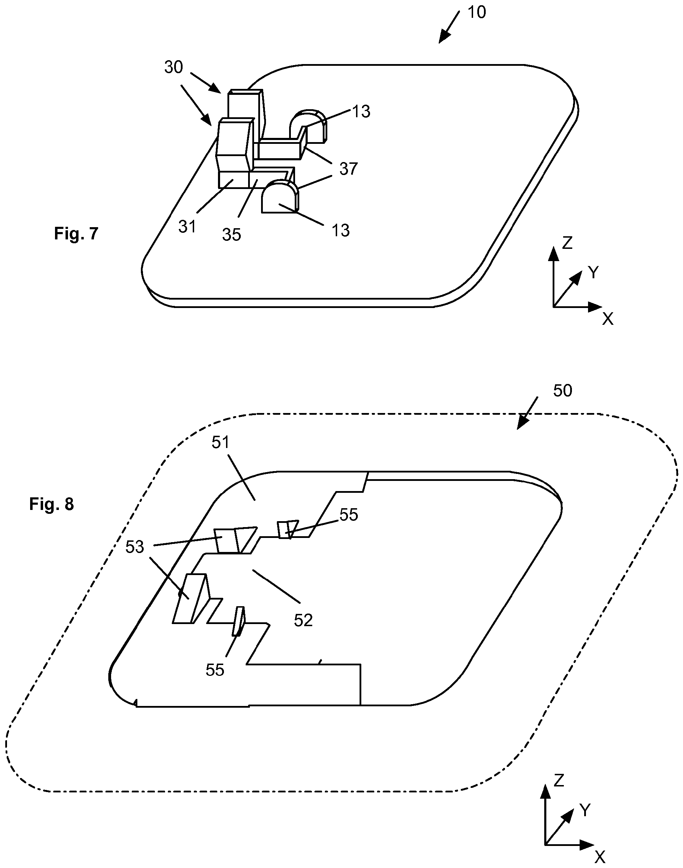

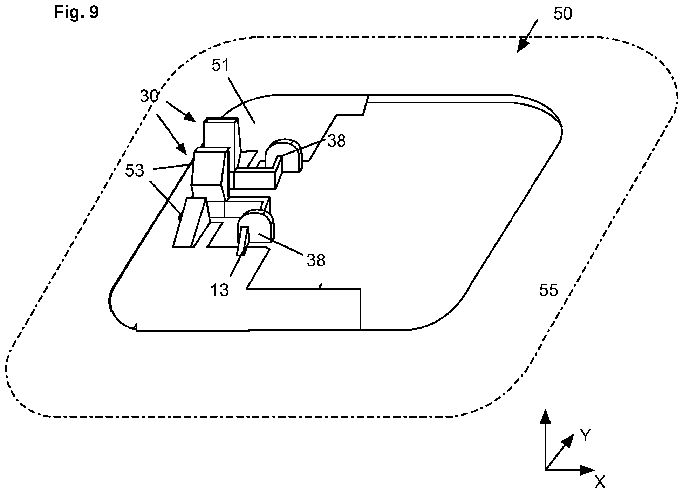

Dans une autre configuration préférée, comme représenté sur les figures 7 à 9, il est en outre possible de prévoir des éléments de guidage latéral 13 qui sont disposées au niveau des extrémités des barres transversales 37 et qui coopèrent avec des éléments de guidage latéral 55 correspondants prévus au niveau du bord de l'évidement 52.

Bien que l'invention ait été décrite dans ce qui précède en référence à des modes de réalisation préférés, elle n'est pas limitée à ceux-ci. Ainsi, il est également possible par exemple de prévoir seulement un élément d'encliquetage 30, ou de prévoir plus de deux éléments d'encliquetage 30, et/ou de concevoir les éléments d'encliquetage 20 dans des orientations différentes les uns par rapport aux autres et/ou au niveau de positions différentes sur le côté arrière 19 du couvercle 10.

### Liste des numéros de référence

- 10: Couvercle
- 12: Crochet
- 13: Elément de guidage latéral
- 14: Saillie
- 15: Axe de basculement
- 18: Couvercle côté avant
- 19: Côté arrière couvercle
- 20: Élément de prise
- 21: Tête
- 22: Bande de prise
- 30: Élément d'encliquetage
- 31: Pied
- 32: Ergot d'encliquetage
- 32a: Surface d'encliquetage
- 32b: Surface d'introduction
- 33: Évidement
- 34: Elément de renforcement
- 35: Barre longitudinale
- 36: Elément de rayon
- 37: Barre transversale
- 38: Barre transversale
- 40: Ouverture
- 50: Paroi
- 51: Elément d'appui
- 52: Évidement
- 53: Élément d'encliquetage
- 54: Zone de réception
- 55: Élément de guidage latéral
- 56: Évidement

## Revendications

1. Couvercle (10) destiné à fermer une ouverture (40) qui est réalisée dans une paroi (50), en particulier d'un élément de carrosserie ou de revêtement d'un véhicule automobile,
dans lequel le couvercle (10) présente au moins un élément d'encliquetage (30) qui dépasse depuis un côté arrière (19) du couvercle (10) et est prévu pour, dans la position de fermeture, venir en prise avec un contour d'encliquetage (53) fixé dans la paroi et associé à l'élément d'encliquetage, dans lequel l'élément d'encliquetage (30) présente un pied (31) et un ergot d'encliquetage (32),
dans lequel l'ergot d'encliquetage (32) définit une surface d'encliquetage (32a) qui repose dans la position de fermeture au niveau du contour d'encliquetage (53),
dans lequel un élément de ressort de torsion est prévu, qui est réalisé vers un côté du pied (31) et est relié au pied (31) et/ou à l'ergot d'encliquetage (32), l'élément de ressort de torsion étant agencé pour exercer, dans la position de fermeture, une force de ressort qui tend l'ergot d'encliquetage (32) contre le contour d'encliquetage (53),
l'élément de ressort de torsion étant réalisé sous la forme d'une barre longitudinale (35) qui dépasse du côté arrière (19) du couvercle (10) et s'étendant, à partir d'un côté du pied (31), dans une direction sensiblement parallèle à une direction longitudinale du pied (31), et en ce que, en outre,
au moins une barre transversale (37, 38) étant prévue, dépassant du côté arrière (19) du couvercle (10) et s'étendant à partir de la barre longitudinale (35) dans une direction transversale à la barre longitudinale (35),
dans lequel le pied (31), la barre longitudinale (35) et ladite au moins une barre transversale (37, 38) sont réalisés d'un seul tenant,
la barre longitudinale (35) formant un ressort de torsion qui, lors de l'insertion et le retrait du couvercle (10), peut se déplacer élastiquement et de façon rotative sur le côté du pied (31) avec celui-ci, tandis que l'autre extrémité de la barre longitudinale (35) est fixée et immobilisée par la barre transversale (37, 38), **caractérisé en ce que** ladite au moins une barre transversale (37, 38) comprend une barre transversale (38) qui est réalisée au niveau d'un côté de la barre longitudinale (35) et est réalisée dans une zone entre l'extrémité en regard du pied (31) et l'extrémité de la barre longitudinale (35) opposée au pied (31).

2. Couvercle (10) selon la revendication 1, **caractérisé en ce que** ladite au moins une barre transversale (37, 38) s'étend selon un angle compris entre 60° et 120°, préférablement entre 80° et 100°, particulièrement préférablement entre 85° et 95°, par rapport à la barre longitudinale (35).

3. Couvercle (10) selon la revendication 2, **caractérisé en ce que** ladite au moins une barre transversale (37, 38) comprend une barre transversale (37) qui est réalisée au niveau d'une extrémité de la barre longitudinale (35) opposée au pied (31).

4. Couvercle (10) selon une des revendications précédentes, **caractérisé en ce que**, au niveau de l'extrémité de la barre transversale (37, 38) opposée à la barre longitudinale (35), un élément de guidage latéral (13) est réalisé et prévu pour venir en appui contre un élément de guidage latéral (55) réalisé au niveau de la paroi (50), de sorte à permettre un guidage du couvercle (10) le long de la direction d'extension de la barre transversale (37).

5. Couvercle (10) selon une des revendications précédentes, **caractérisé en ce que** la barre longitudinale (35) présente, au niveau de l'extrémité en regard du pied (31), une hauteur qui est supérieure ou égale à la hauteur du pied (31).

6. Couvercle (10) selon la revendication 5, **caractérisé en ce que** la barre longitudinale (35) présente, au niveau de l'extrémité en regard du pied (31) au niveau du côté supérieur, un élément de rayon réalisée (36) par le biais de laquelle la barre longitudinale (35) est reliée à l'ergot d'encliquetage (32).

7. Couvercle (10) selon une des revendications 5 à 6, **caractérisé en ce que**
l'ergot d'encliquetage (32) présente, sur le côté en regard de la barre longitudinale (35), un élément de renforcement (34), et
dans l'ergot d'encliquetage (32), un évidement (33) est en outre pratiqué et s'ouvre vers le côté arrière qui est opposé à la surface d'encliquetage (32a) et latéralement vers le côté opposé à la barre longitudinale (35),
dans lequel, un rapport de l'épaisseur de matériau de l'élément de renforcement (34) sur l'épaisseur de la barre longitudinale (35) est compris entre 0,8 et 2,0, de préférence entre 1,0 et 1,5, plus préférentiellement entre 1,1 à 1,3.

8. Couvercle (10) selon une des revendications précédentes, **caractérisé en ce que** le pied (31) et la barre longitudinale (35) présentent une épaisseur sensiblement égale, dans lequel préférablement un rapport de l'épaisseur sur l'épaisseur de matériau du couvercle (10) est compris entre 0,25 et 0,40, de préférence entre 0,30 et 0,37.

9. Couvercle (10) selon une des revendications précédentes, **caractérisé en ce que**
la barre longitudinale (35) s'étend sur une longueur qui est comprise entre 4 et 10 mm, préférablement entre 5 et 8 mm, plus préférentiellement entre 6 et 7 mm, et/ou
un rapport de la longueur de la barre longitudinale (35) sur la longueur du pied (31) est compris entre 0,7 et 1,3, de préférence entre 0,8 et 1,2, plus préférentiellement entre 0,9 et 1,1, et en particulier est sensiblement égal à 1, et/ou
un rapport de la hauteur de la barre longitudinale (35) sur la hauteur du pied (31) est compris entre 0,8 et 1,2, de préférence entre 0,9 et 1,1, et plus préférentiellement est sensiblement égal à 1,0.

10. Couvercle (10) selon une des revendications précédentes, **caractérisé en ce que** le couvercle (10) présente deux éléments d'encliquetage (30), qui sont disposés préférablement parallèlement l'un à l'autre avec des ergots d'encliquetage (32) tournés dans des directions opposées, et plus préférablement les barres transversales (37, 38) des deux éléments d'encliquetage (30) s'étendent dans des directions respectivement opposées depuis les deux barres longitudinales (35) des deux éléments d'encliquetage (30)

11. Ensemble de paroi et de couvercle, en particulier d'un élément de carrosserie ou de revêtement d'un véhicule automobile, comprenant : un couvercle (10) selon une des revendications précédentes ; et une paroi (50), dans laquelle l'ouverture (40) est réalisée et peut être fermée par le couvercle (10).

12. Ensemble selon la revendication précédente, **caractérisé en ce que**
le couvercle (10), une fois inséré dans l'ouverture (40), peut pivoter autour d'un axe de basculement (15) entre une position de fermeture, dans laquelle le couvercle (10) ferme l'ouverture (40), et une position de basculement dans laquelle le couvercle (10) bascule par rapport à sa position de fermeture et peut être enlevé de l'ouverture (40) et/ou inséré dans l'ouverture (40),
dans lequel le couvercle (10) est formé de manière sensiblement complémentaire à l'ouverture (40) et remplit sensiblement celle-ci dans la position de fermeture,
dans lequel la paroi (50) présente au niveau de l'ouverture (40) un élément d'appui (51) pour le couvercle (10),
dans lequel le couvercle (10) présente au moins un ardillon (12) qui est prévu sur le côté arrière (19) du couvercle (10) pour, dans la position de fermeture, être en prisse par derrière sur un bord de l'ouverture (40),
dans lequel, dans la position de fermeture, l'action d'une force de pression au niveau d'un côté avant (18) du couvercle (10) dans une zone opposée à au moins un élément d'encliquetage(11) par rapport à l'axe de basculement (15) conduit à dégager ledit au moins un élément d'encliquetage (11) et à faire basculer le couvercle (10) de sa position de fermeture dans sa position de basculement.

13. Ensemble selon l'une des revendications 11 à 12,
**caractérisé en ce que** le côté avant (18) du couvercle (10) est formé de telle sorte qu'il forme, dans la position de fermeture, un bloc d'un seul tenant avec la paroi (50).

14. Ensemble selon une des revendications 11 à 13,
**caractérisé en ce que** la paroi (50) est formée par un revêtement de pare-chocs d'un véhicule automobile, l'ouverture (40) permettant de préférence un accès à un moyen de remorquage, par exemple une anneau de remorquage ou un crochet de dépannage, du véhicule automobile à travers le revêtement de pare-chocs.

## Patentansprüche

1. Deckel (10) zum Verschließen einer Öffnung (40), der in einer Wand (50), insbesondere eines Karosserie- oder Verkleidungsteils eines Kraftfahrzeugs, ausgebildet ist, wobei der Deckel (10) mindestens ein von einer Rückseite (19) des Deckels (10) abstehendes Rastelement (30) aufweist, für das vorgesehen ist, in der Schließstellung mit einer in der Wand befestigten und dem Rastelement zugeordneten Rastkontur (53) in Eingriff kommen, wobei das Rastelement (30) einen Fuß (31) und eine Rastnase (32) aufweist,
wobei die Rastnase (32) eine Rastfläche (32a) definiert, die in der Schließstellung auf der Rastkontur (53) aufliegt,
wobei ein Torsionsfederelement vorgesehen ist, das zu einer Seite des Fußes (31) hin ausgebildet ist und mit dem Fuß (31) und/oder der Rastnase (32) verbunden ist, wobei das Torsionsfederelement so angeordnet ist, dass es in der Schließstellung eine Federkraft ausübt, die die Rastnase (32) gegen die Rastkontur (53) spannt,
wobei das Torsionsfederelement als Längssteg (35) ausgebildet ist, der über die Rückseite (19) des Deckels (10) hinausragt und sich erstreckt, von einer Seite des Fußes (31), in einer Richtung im Wesentlichen parallel zu einer Längsrichtung des Fußes (31), und dass ferner
mindestens eine Querstange (37, 38) vorgesehen ist, die von der Rückseite (19) des Deckels (10) absteht und sich von dem Längssteg (35) in eine Richtung quer zum Längssteg (35) erstreckt,
wobei der Fuß (31), der Längssteg (35) und der mindestens eine Quersteg (37, 38) einstückig ausgebildet sind,
wobei der Längssteg (35) eine Torsionsfeder bildet, die, beim Einsetzen und Herausnehmen des Deckels (10) elastisch und drehbar auf der Seite des Fußes (31) mitbewegen kann, während das andere Ende des Längssteges (35) durch den Quersteg (37, 38) fixiert und gesichert ist, **dadurch gekennzeichnet, dass** der mindestens eine Quersteg (37, 38) einen Quersteg (38) aufweist, der an einer Seite des Längsstegs (35) ausgebildet ist und in einem Bereich zwischen dem dem Fuß (31) zugewandten Ende und dem dem Fuß (31) gegenüberliegenden Ende des Längsstegs (35) ausgebildet ist.

2. Deckel (10) nach Anspruch 1, **dadurch gekennzeichnet, dass** der mindestens eine Quersteg (37, 38) in einem Winkel zwischen 60° und 120°, vorzugsweise zwischen 80° und 100°, besonders bevorzugt zwischen 85° und 95°, in Bezug auf den Längssteg (35) verläuft.

3. Deckel (10) nach Anspruch 2, **dadurch gekennzeichnet, dass** der mindestens eine Quersteg (37, 38) einen Quersteg (37) aufweist, der an einem dem Fuß (31) gegenüberliegenden Ende des Längsstegs (35) vorgesehen ist.

4. Deckel (10) nach einem der vorhergehenden Ansprüche, **dadurch gekennzeichnet, dass** an dem dem Längssteg (35) gegenüberliegenden Ende des Querstegs (37, 38) ein seitliches Führungselement (13) ausgebildet ist und dazu vorgesehen ist, sich an einem an der Wand (50) ausgebildeten seitlichen Führungselement (55) abzustützen, so dass eine Führung des Deckels (10) entlang der Erstreckungsrichtung des Querstegs (37) möglich ist.

5. Deckel (10) nach einem der vorhergehenden Ansprüche, **dadurch gekennzeichnet, dass** der Längssteg (35) an dem dem Fuß (31) zugewandten Ende eine Höhe aufweist, die größer oder gleich der Höhe des Fußes (31) ist.

6. Deckel (10) nach Anspruch 5, **dadurch gekennzeichnet, dass** der Längssteg (35) an dem dem Fuß (31) zugewandten Ende auf der Oberseite ein ausgebildetes Radius-Element (36) aufweist, über das der Längssteg (35) mit der Rastnase (32) verbunden ist.

7. Deckel (10) nach einem der Ansprüche 5 bis 6, **dadurch gekennzeichnet, dass**
die Rastnase (32) auf der dem Längssteg (35) zugewandten Seite ein Verstärkungselement (34) aufweist, und
in der Rastnase (32) zusätzlich eine Ausnehmung (33) vorgesehen ist, die nach der der Rastfläche (32a) gegenüberliegenden Rückseite und seitlich zu der dem Längssteg (35) gegenüberliegenden Seite hin ausmündet,
wobei ein Verhältnis der Materialdicke des Verstärkungselements (34) zu der Dicke des Längsstegs (35) zwischen 0,8 und 2,0, vorzugsweise zwischen 1,0 und 1,5, besonders bevorzugt zwischen 1,1 und 1,3 liegt.

8. Deckel (10) nach einem der vorhergehenden Ansprüche, **dadurch gekennzeichnet, dass** der Fuß (31) und der Längssteg (35) eine im Wesentlichen gleiche Dicke aufweisen, wobei vorzugsweise ein Verhältnis der Dicke zur Materialstärke des Deckels (10) zwischen 0,25 und 0,40, vorzugsweise zwischen 0,30 und 0,37 liegt.

9. Deckel (10) nach einem der vorhergehenden Ansprüche, **dadurch gekennzeichnet, dass**
sich der Längssteg (35) über eine Länge erstreckt, die zwischen 4 und 10 mm, vorzugsweise zwischen 5 und 8 mm, besonders bevorzugt zwischen 6 und 7 mm liegt, und/oder
ein Verhältnis der Länge des Längsstegs (35) zur Länge des Fußes (31) zwischen 0,7 und 1,3, vorzugsweise zwischen 0,8 und 1,2, noch bevorzugter zwischen 0,9 und 1,1, und noch bevorzugter im Wesentlichen gleich 1 ist, und/oder ein Verhältnis der Höhe des Längsstegs (35) zur Höhe des Fußes (31) zwischen 0,8 und 1,2, vorzugsweise zwischen 0,9 und 1,1, und noch bevorzugter im Wesentlichen gleich 1,0 ist.

10. Deckel (10) nach einem der vorhergehenden Ansprüche, **dadurch gekennzeichnet, dass** der Deckel (10) zwei Rastelemente (30) aufweist, die vorzugsweise parallel zueinander mit in entgegengesetzte Richtungen weisenden Rastnasen (32) angeordnet sind, und weiter vorzugsweise die Querstege (37, 38) der beiden Rastelemente (30) in jeweils entgegengesetzte Richtungen von den beiden Längsstegen (35) der beiden Rastelemente (30) ausgehen.

11. Wand- und Deckelanordnung, insbesondere eines Karosserie- oder Verkleidungselements eines Kraftfahrzeugs, aufweisend: einen Deckel (10) nach einem der vorhergehenden Ansprüche; und eine Wand (50), in der die Öffnung (40) ausgebildet ist und durch den Deckel (10) verschlossen werden kann.

12. Anordnung nach dem vorhergehenden Anspruch, **dadurch gekennzeichnet, dass** der Deckel (10) nach dem Einsetzen in die Öffnung (40) um eine Schwenkachse (15) zwischen einer Schließstellung, in der der Deckel (10) die Öffnung (40) verschließt, und einer Schwenkstellung, in der der Deckel (10) relativ zu seiner Schließstellung verschwenkt ist und aus der Öffnung (40) entnommen und/oder in die Öffnung (40) eingesetzt werden kann, verschwenkbar ist,
wobei der Deckel (10) im Wesentlichen komplementär zur Öffnung (40) ausgebildet ist und diese in der geschlossenen Stellung im Wesentlichen ausfüllt,
wobei die Wand (50) an der Öffnung (40) ein Stützelement (51) für den Deckel (10) aufweist,
wobei der Deckel (10) mindestens einen Widerhaken (12) aufweist, der an der Rückseite (19) des Deckels (10) vorgesehen ist, um einen Rand der Öffnung (40) in der geschlossenen Stellung zu hintergreifen,
wobei in der geschlossenen Stellung die Einwirkung einer Druckkraft an einer Vorderseite (18) des Deckels (10) in einem Bereich, der dem mindestens einen Rastelement (11) in Bezug auf die Schwenkachse (15) gegenüberliegt, dazu führt, dass das mindestens eine Rastelement (11) ausgerastet wird und der Deckel (10) aus seiner Schließstellung in seine Schwenkstellung geschwenkt wird.

13. Anordnung nach einem der Ansprüche 11 bis 12, **dadurch gekennzeichnet, dass** die Vorderseite (18) des Deckels (10) so ausgebildet ist, dass sie in der geschlossenen Stellung einen integralen Block mit der Wand (50) bildet.

14. Anordnung nach einem der Ansprüche 11 bis 13, **dadurch gekennzeichnet, dass** die Wand (50) durch eine Stoßfängerverkleidung eines Kraftfahrzeugs gebildet ist, wobei die Öffnung (40) vorzugsweise den Zugang zu einem Abschleppmittel, beispielsweise einer Abschleppöse oder einem Abschlepphaken, des Kraftfahrzeugs durch die Stoßfängerverkleidung ermöglicht.

## Claims

1. Cover (10) for closing an opening (40) which is formed in a wall (50), in particular of a bodywork element or covering element of a motor vehicle, the cover (10) having at least one latching element (30) which protrudes from a rear side (19) of the cover (10) and is provided for, in the closed position, engaging with a latching contour (53) fixed in the wall and associated with the latching element, the latching element (30) having a base (31) and a latching lug (32), the latching lug (32) defining a latching surface (32a) which rests, in the closed position, at the latching contour (53), a torsion spring element being provided, which is formed toward one side of the base (31) and is connected to the base (31) and/or the latching lug (32), the torsion spring element being arranged to exert, in the closed position, a spring force which tightens the latching lug (32) against the latching contour (53), the torsion spring element being in the form of a longitudinal bar (35) which protrudes from the rear side (19) of the cover (10) and extends, from one side of the base (31), in a direction substantially parallel to a longitudinal direction of the base (31), and in that, furthermore, at least one transverse bar (37, 38) being provided, protruding from the rear side (19) of the cover (10) and extending from the longitudinal bar (35) in a direction transverse to the longitudinal bar (35), the base (31), the longitudinal bar (35) and said at least one transverse bar (37, 38) being formed in one piece, the longitudinal bar (35) forming a torsion spring which, upon insertion and removal of the cover (10), can resiliently and rotatably move on the side of the base (31) together with same, while the other end of the longitudinal bar (35) is fixed and immobilized by the transverse bar (37, 38), **characterized in that** said at least one transverse bar (37, 38) comprises a transverse bar (38) which is formed at one side of the longitudinal bar (35) and is formed in a region between the end facing the base (31) and the end of the longitudinal bar (35) opposite the base (31).

2. Cover (10) according to claim 1, **characterized in that** said at least one transverse bar (37, 38) extends at an angle of between 60° and 120°, preferably between 80° and 100°, particularly preferably between 85° and 95°, relative to the longitudinal bar (35).

3. Cover (10) according to claim 2, **characterized in that** said at least one transverse bar (37, 38) comprises a transverse bar (37) which is formed at an end of the longitudinal bar (35) opposite the base (31).

4. Cover (10) according to any of the preceding claims, **characterized in that**, at the end of the transverse bar (37, 38) opposite the longitudinal bar (35), a lateral guide element (13) is formed and provided for abutting a lateral guide element (55) formed at the wall (50), so as to allow the cover (10) to be guided along the extension direction of the transverse bar (37).

5. Cover (10) according to any of the preceding claims, **characterized in that** the longitudinal bar (35) has, at the end facing the base (31), a height which is greater than or equal to the height of the base (31).

6. Cover (10) according to claim 5, **characterized in that** the longitudinal bar (35) has, at the end facing the base (31) at the upper side, a produced spoke element (36) by means of which the longitudinal bar (35) is connected to the latching lug (32).

7. Cover (10) according to either claim 5 or claim 6, **characterized in that** the latching lug (32) has, on the side facing the longitudinal bar (35), a reinforcing element (34), and in the latching lug (32), a recess (33) is also formed and opens toward the rear side opposite the latching surface (32a) and laterally toward the side opposite the longitudinal bar (35), a ratio of the material thickness of the reinforcing element (34) to the thickness of the longitudinal bar (35) being between 0.8 and 2.0, preferably between 1.0 and 1.5, more preferably between 1.1 and 1.3.

8. Cover (10) according to any of the preceding claims, **characterized in that** the base (31) and the longitudinal bar (35) have a substantially equal thickness, a ratio of the thickness to the material thickness of the cover (10) preferably being between 0.25 and 0.40, preferably between 0.30 and 0.37.

9. Cover (10) according to any of the preceding claims, **characterized in that** the longitudinal bar (35) extends over a length which is between 4 and 10 mm, preferably between 5 and 8 mm, more preferably between 6 and 7 mm, and/or a ratio of the length of the longitudinal bar (35) to the length of the base (31) is between 0.7 and 1.3, preferably between 0.8 and 1.2, more preferably between 0.9 and 1.1, and in particular is substantially equal to 1, and/or a ratio of the height of the longitudinal bar (35) to the height of the base (31) is between 0.8 and 1.2, preferably between 0.9 and 1.1, and more preferably is substantially equal to 1.0.

10. Cover (10) according to any of the preceding claims, **characterized in that** the cover (10) has two latching elements (30), which are preferably arranged parallel to one another with latching lugs (32) facing in opposite directions, and more preferably the transverse bars (37, 38) of the two latching elements (30) extend in respectively opposite directions from the two longitudinal bars (35) of the two latching elements (30).

11. Wall and cover assembly, in particular of a bodywork element or covering element of a motor vehicle, comprising:
a cover (10) according to any of the preceding claims;
and a wall (50), in which the opening (40) is formed and can be closed by the cover (10).

12. Assembly according to the preceding claim, **characterized in that** the cover (10), once inserted into the opening (40), can pivot about a tilting axis (15) between a closed position, in which the cover (10) closes the opening (40), and a tilting position, in which the cover (10) tilts in relation to its closed position and can be removed from the opening (40) and/or inserted into the opening (40), the cover (10) being formed so as to be substantially complementary to the opening (40) and substantially fills said opening in the closed position, the wall (50) having, at the opening (40), a support element (51) for the cover (10), the cover (10) having at least one barb (12) which is provided on the rear side (19) of the cover (10) for, in closed position, being engaged from behind on an edge of the opening (40), wherein, in the closed position, the action of a pressure force at a front side (18) of the cover (10) in a region opposite at least one latching element (11) in relation to the tilting axis (15) results in said at least one latching element (11) being disengaged and the cover (10) being tilted from the closed position thereof into the tilting position thereof.

13. Assembly according to either claim 11 or claim 12, **characterized in that** the front side (18) of the cover (10) is formed in such a way that it forms, in the closed position, a one-piece block with the wall (50).

14. Assembly according to any of claims 11 to 13, **characterized in that** the wall (50) is formed by a covering of a bumper of a motor vehicle, the opening (40) preferably allowing access to a towing means, for example a tow ring or a recovery hook, of the motor vehicle through the bumper coating.
